# EUROPEAN PATENT APPLICATION

(11) **EP 4 822 840 A1**
(43) Date of publication of application: **14.10.2026**
(21) Application number: 24899981.5
(22) Date of filing: 06.12.2024
(51) Int. Cl.: H01M 50/176, H01M 50/184, H01M 50/188, H01M 50/15, H01M 50/103, H01M 50/586, H01M 50/593

(54) **BATTERY CASE AND BATTERY**

(30) Priority: 07.12.2023 CN 202311670353
(71) Applicant: SVOLT Energy Technology Co., Ltd., Changzhou, Jiangsu 213200 (CN)
(72) Inventor: SUN, Chao, hangzhou, Jiangsu 213200 (CN); GONG, Weihong, hangzhou, Jiangsu 213200 (CN); YUAN, Yue, hangzhou, Jiangsu 213200 (CN); HOU, Zhanrui, hangzhou, Jiangsu 213200 (CN); ZHOU, Jie, hangzhou, Jiangsu 213200 (CN)
(74) Representative: Michalski Hüttermann & Partner mbB
(86) International application number: PCT/CN2024/137513
(87) International publication number: WO 2025/119348

(57) **Abstract**

The present application relates to the technical field of batteries, and discloses a battery case and a battery. The battery case comprises: a main body, provided with pole holes; pole assemblies, running through the pole holes; first insulating parts, arranged between the main body and the pole assemblies; and sealing rings, arranged corresponding to the pole holes, wherein the sealing rings are compressed between the main body and the pole assemblies and/or between the first insulating parts and the pole assemblies; the range of a first overlap amount x of a first insulating part and the corresponding sealing ring is 0.3 mm to 0.6 mm, and/or the range of a second overlap amount y of the main body and a sealing ring is from 0.5 mm to 1.0 mm. The present application ensures the sealing performance and the insulation performance of the battery case, reduces the cost of the sealing rings, reduces the overall weight of the battery case, and achieves the goal of battery weight reduction.

## Description

### CROSS-REFERENCE TO THE RELATED APPLICATIONS

The present application claims priority to Chinese Patent Application No. 202311670353.8, filed with the China National Intellectual Property Administration on December 7, 2023, entitled "BATTERY CASE AND BATTERY", the contents of which are incorporated herein by reference in entirety.

### TECHNICAL FIELD

The present application relates to the technical field of batteries, and specifically to a battery case and a battery.

### BACKGROUND

With the continuous development of the battery industry, lithium-ion batteries are widely used in fields such as vehicles and mobile devices due to their advantage of high energy density. The battery case is an important component for ensuring battery safety, and a sealing ring in the battery case plays a crucial role in the sealing and insulation performance of the battery case. For example, a battery case typically includes a battery top cover, and the battery top cover mainly includes a terminal, a sealing ring, a bare aluminum plate, a rupture disk, a lower plastic part, and an upper plastic part. In existing battery top covers, sealing between the terminal and the bare aluminum plate is achieved by compressing the sealing ring. Therefore, the fit requirements among the sealing ring, the terminal, the bare aluminum plate, and other structures are of great importance.

### SUMMARY

In view of this, the present application provides a battery case and a battery, so as to solve the problem in the prior art that the sealing performance of the battery case cannot be guaranteed due to the lack of definition of the fit relationship between the sealing ring and other components in the battery case.

In the first aspect, the present application provides a battery case, including: a main body, provided with a terminal hole (pole hole); a terminal assembly (pole assembly), provided to pass through the terminal hole; a first insulating part, provided between the main body and the terminal assembly; and a sealing ring, provided corresponding to the terminal hole, the sealing ring being compressed between the main body and the terminal assembly and/or between the first insulating part and the terminal assembly, where a first overlap amount x between the first insulating part and the sealing ring ranges from 0.3 mm to 0.6 mm, and/or a second overlap amount y between the main body and the sealing ring ranges from 0.5 mm to 1.0 mm.

Beneficial effect: While the sealing performance and the insulation performance of the battery case are ensured, the cost of the sealing ring and the overall weight of the battery case are reduced, and the goal of battery lightweighting is achieved.

In an optional embodiment, the sealing ring overlaps both the first insulating part and the main body, and the second overlap amount y is greater than or equal to the first overlap amount x.

Beneficial effect: The overlapping and compression effect of the main body on the sealing ring is superior to that of the first insulating part on the sealing ring. Therefore, the sealing performance of the battery case is realized mainly through the overlapping and compression of the main body on the sealing ring. By enabling y≥x, the overlapping effect of the main body on the sealing ring is ensured, improving the sealing performance.

In an optional embodiment, a first compression amount m of the sealing ring by the first insulating part ranges from 0.2 mm to 0.5 mm; and/or a second compression amount n of the sealing ring by the main body ranges from 0.33 mm to 0.66 mm; and/or the main body includes a housing and/or a cover plate, and the terminal hole is provided in the housing and/or the cover plate.

In an optional embodiment, a first compression ratio α of the sealing ring by the first insulating part ranges from 8% to 20%; and/or a second compression ratio β of the sealing ring by the main body ranges from 30% to 60%.

Beneficial effect: While the sealing performance and insulation performance of the battery case are ensured, the cost of the sealing ring is reduced, the plastic strength of the sealing ring is guaranteed, the overall weight of the battery case is reduced, and the goal of battery lightweighting is achieved.

In an optional embodiment, the terminal assembly includes a terminal body, where the terminal body provided to pass through the terminal hole, and the first insulating part is provided with a first through hole allowing the terminal body to pass therethrough.

Beneficial effect: By providing the first insulating part, the insulation performance between the terminal body and the main body is ensured.

In an optional embodiment, the battery case further includes a second insulating part, where the second insulating part is provided with a second through hole allowing the terminal body to pass therethrough; the second insulating part is provided between a lower surface of the main body and the terminal body; and/or, the sealing ring has a multi-layer structure, where one layer which functions as an upper layer of the sealing ring is disposed corresponding to the first insulating part, and another layer which functions as a lower layer of the sealing ring is disposed corresponding to the main body; an outer diameter of the upper layer of the sealing ring is A, an outer diameter of the lower layer of the sealing ring is B, and a diameter of the terminal body corresponding to the sealing ring is O; a first overlap ratio X between the first insulating part and the upper layer of the sealing ring is expressed as X=x/(A/2-O/2), and the first overlap ratio X ranges from 37.5% to 75%; a second overlap ratio Y between the main body and the lower layer of the sealing ring is expressed as Y=y/(B/2-O/2), and the second overlap ratio Y ranges from 33.3% to 66.6%.

Beneficial effect: By providing the second insulating part, the insulation performance between the main body and the terminal body is ensured.

In an optional embodiment, a hole wall of the first through hole is provided closer to the terminal body than a hole wall of the terminal hole, such that the first insulating part extends beyond the main body toward the terminal body, and the portion of the first insulating part extending beyond the main body presses against the sealing ring; and/or a hole wall of the terminal hole is provided closer to the terminal body than a hole wall of the second through hole, such that the main body extends beyond the second insulating part toward the terminal body, and the portion of the main body extending beyond the second insulating part presses against the sealing ring.

Beneficial effect: The extending portion of the first insulating part and the extending portion of the main body simultaneously press the sealing ring, causing the sealing ring to be compressed and deformed, thereby ensuring the sealing performance of the battery case.

In an optional embodiment, a diameter of the first through hole is a, and a diameter of the terminal hole is b, satisfying x=A/2-a/2, and y=B/2-b/2.

In an optional embodiment, a height of the upper layer of the sealing ring is C, a height of the lower layer of the sealing ring is D, a distance from a lower surface of the first insulating part to a lower surface of the sealing ring is c, and a distance from the lower surface of the main body to the lower surface of the sealing ring is d, satisfying m=C-c, n=D-d, α=m/C, and β=n/D.

In the second aspect, the present application further provides a battery, including the battery case described above.

### BRIEF DESCRIPTION OF THE DRAWINGS

To more clearly illustrate the technical solutions in the embodiments of the present application or in the prior art, the drawings required for describing the embodiments or the prior art will be briefly introduced below. Obviously, the drawings described below illustrate some embodiments of the present application. For those of ordinary skill in the art, other drawings may be obtained based on these drawings without making inventive efforts.
FIG. 1 is a schematic view of an overall structure of a battery top cover according to an embodiment of the present application;
FIG. 2 is a cross-sectional view of the battery top cover shown in FIG. 1 at a terminal assembly;
FIG. 3 is a schematic view of a first overlap amount and a second overlap amount of the battery top cover in FIG. 2;
FIG. 4 is a schematic view of an outer diameter of an upper layer of a sealing ring, an outer diameter of a lower layer of the sealing ring, a diameter of a terminal body, a diameter of a first through hole, and a diameter of a terminal hole in the battery top cover in FIG. 2;
FIG. 5 is a schematic view of a first compression amount and a second compression amount of the battery top cover in FIG. 2;
FIG. 6 is a schematic view of a height of the upper layer of the sealing ring, a height of the lower layer of the sealing ring, a distance from a lower surface of a first insulating part to a lower surface of the sealing ring, and a distance from a lower surface of a cover plate to the lower surface of the sealing ring in the battery top cover in FIG. 2;
FIG. 7 is a cross-sectional view of another battery top cover according to an embodiment of the present application at a terminal assembly.

### Reference numerals:

1. main body; 101. terminal hole; 2. terminal assembly; 201. terminal body; 202. riveting block; 3. first insulating part; 301. first through hole; 4. sealing ring; 5. second insulating part; 501. second through hole.

### DETAILED DESCRIPTION OF THE EMBODIMENTS

In order to make the objectives, technical solutions, and advantages of the embodiments of the present application clearer, the technical solutions in the embodiments of the present application will be described clearly and completely in conjunction with the drawings in the embodiments of the present application. Obviously, only some but not all embodiments of the present application are described. Based on the embodiments in the present application, all other embodiments obtained by those skilled in the art without making inventive efforts fall within the scope of protection of the present application.

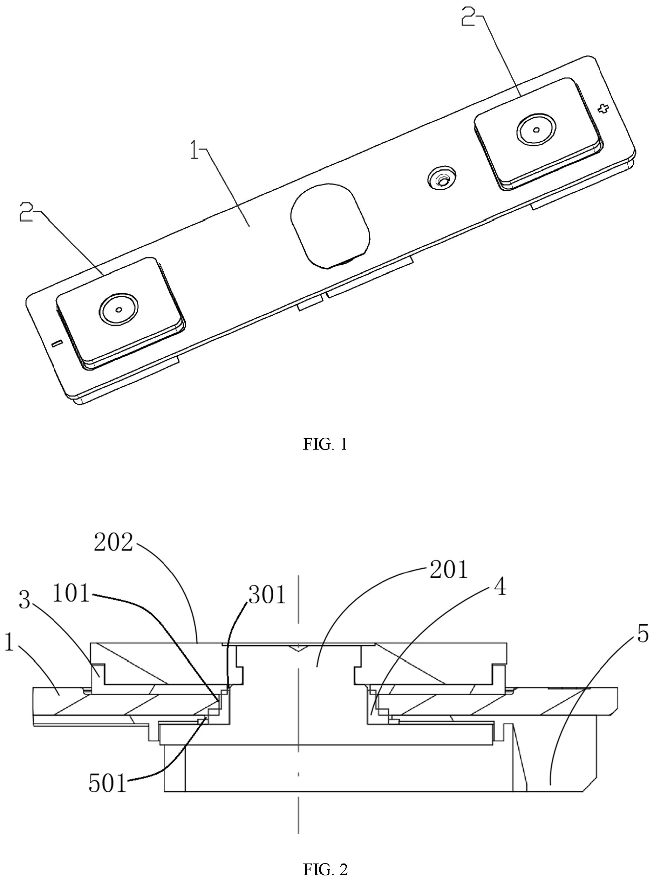

Embodiments of the present application will be described below with reference to FIG. 1 to FIG. 7.

According to embodiments of the present application, in one aspect, a battery case is provided, including a main body 1, terminal assemblies 2, first insulating parts 3, and sealing rings 4. The main body 1 is provided with terminal holes 101, each terminal assembly 2 is disposed to pass through the terminal hole 101, and each first insulating part 3 is provided between the main body 1 and the terminal assembly 2. Each sealing ring 4 is arranged corresponding to the terminal hole 101, and the sealing ring 4 is compressed between the main body 1 and the terminal assembly 2 and/or between the first insulating part 3 and the terminal assembly 2. A first overlap amount x between the first insulating part 3 and the sealing ring 4 ranges from 0.3 mm to 0.6 mm; and/or, a second overlap amount y between the main body 1 and the sealing ring 4 ranges from 0.5 mm to 1.0 mm.

The application of the battery case in the present embodiment reduces the cost of the sealing ring 4 and the overall weight of the battery case while ensuring the sealing performance and the insulation performance of the battery case, achieving the goal of battery lightweighting. Specifically, in a case where x<0.3 mm and y<0.5 mm, the values of x and y are too small, which will affect the overlap amounts between the sealing ring 4 and the first insulating part 3 and between the sealing ring 4 and the main body 1, resulting in reduced sealing performance and insulation performance between the sealing ring 4 and the first insulating part 3 and between the sealing ring 4 and the main body 1, thereby impairing the sealing performance and insulation performance of the battery case. In a case where x>0.6 mm and y>1.0 mm, the values of x and y are too large, which will increase the cost of the sealing ring 4 and the weight of the battery case, failing to meet the lightweighting goal of the overall battery structure.

Optionally, the first overlap amount x takes a value of 0.4. Certainly, in other alternative embodiments, x may also takes a value of 0.3, 0.38, 0.39, 0.41, 0.42, 0.43, 0.5, 0.6, etc.

Optionally, the second overlap amount y takes a value of 0.75. Certainly, in other alternative embodiments, y may also take a value of 0.5, 0.6, 0.73, 0.74, 0.76, 0.77, 0.8, 0.9, 1.0, etc.

In an embodiment, each sealing ring 4 overlaps both the first insulating part 3 and the main body 1, and the second overlap amount y is greater than or equal to the first overlap amount x. The overlapping and compression effect of the main body 1 on the sealing ring 4 is superior to that of the first insulating part 3 on the sealing ring 4. Therefore, the sealing performance of the battery case is achieved mainly by the overlapping and compression of the main body 1 on the sealing ring 4. By making y≥x, the overlapping effect of the main body 1 on the sealing ring 4 is ensured, and the sealing performance is improved.

It should be noted that the main body 1 is typically made of a metal alloy material (for example, a cover plate is a bare aluminum plate), such as aluminum alloy; and the first insulating part 3 is made of a plastic material, such as PP material. Plastic materials are softer than metal alloy materials. After the terminal assembly 2 is riveted and pressed to the main body 1, regarding the overlapping effect and compression effect on the sealing ring 4, the main body 1, with high strength and high hardness, exhibits relatively good overlapping and sealing effect on the sealing ring 4.

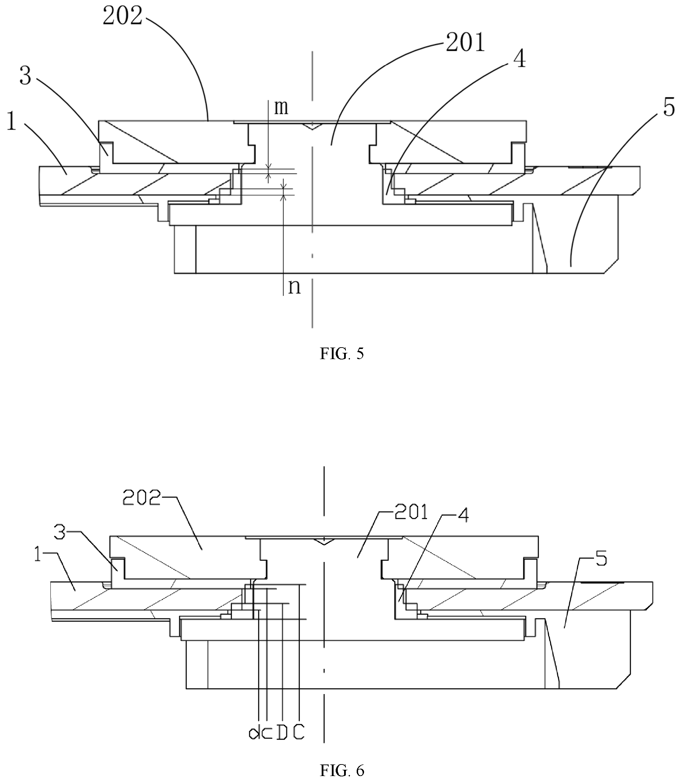

In an embodiment, as shown in FIG. 5, a first compression amount m of the sealing ring 4 by the first insulating part 3 ranges from 0.2 mm to 0.5 mm, and/or a second compression amount n of the sealing ring 4 by the main body 1 ranges from 0.33 mm to 0.66 mm.

In an embodiment, a first compression ratio α of the sealing ring 4 by the first insulating part 3 ranges from 8% to 20%, and/or a second compression ratio β of the sealing ring 4 by the main body 1 ranges from 30% to 60%.

The application of the battery case in the present embodiment reduces the cost of the sealing ring 4, guarantees the plastic strength of the sealing ring 4, and reduces the overall weight of the battery case while ensuring the sealing performance and insulation performance of the battery case, achieving the goal of the battery lightweighting. Specifically, in a case where m<0.2 mm, n<0.33 mm, α<8%, and β<30%, the values of m, n, α, and β are too small, which will affect the compression amounts and compression ratios of the sealing ring 4 by the first insulating part 3 and the main body 1, further compromising the sealing performance and insulation performance of the sealing ring 4 for the battery case. In a case where m>0.5 mm, n>0.66 mm, α>20%, and β>60%, the values of m, n, α, and β are too large, which will increase the cost of the sealing ring 4 and the weight of the battery case, failing to meet the lightweighting goal of the overall battery structure. Moreover, the increase in the compression amount and compression ratio will cause permanent deformation of the sealing ring 4 and reduce plastic strength.

Optionally, the first compression amount m takes a value of 0.3. Certainly, in other alternative embodiments, m may also take a value of 0.2, 0.25, 0.29, 0.31, 0.32, 0.35, 0.4, 0.45, 0.5, etc.

Optionally, the second compression amount n takes a value of 0.45. Certainly, in other alternative embodiments, n may also take a value of 0.33, 0.35, 0.4, 0.41, 0.46, 0.47, 0.49, 0.5, 0.55, 0.6, 0.66, etc.

Optionally, the first compression ratio α takes a value of 12%. Certainly, in other alternative embodiments,α may also take a value of 8%, 10%, 11.8%, 11.93%, 12.3%, 12.7%, 13.1%, 14%, 16%, 17%, 18%, 19%, 20%, etc.

Optionally, the second compression ratio β takes a value of 40%. Certainly, in other alternative embodiments,β may also take a value of 30%, 31%, 35%, 36%, 37.96%, 40.41%, 41.96%, 42.73%, 43.36%, 45%, 50%, 54%, 60%, etc.

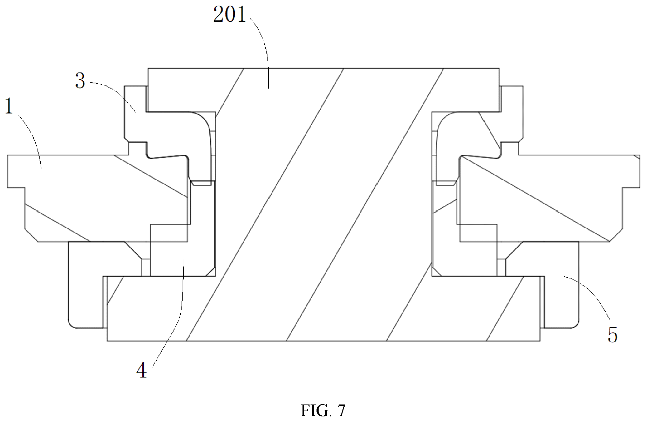

In an embodiment, as shown in FIG. 2 and FIG. 7, each terminal assembly 2 includes a terminal body 201, where the terminal body 201 is disposed to pass through the terminal hole 101, and each first insulating part 3 is provided with a first through hole 301 allowing the terminal body 201 to pass therethrough. By providing the first insulating part 3, insulation performance between the terminal body 201 and the main body 1 is ensured.

It is worth noting that, in an embodiment, as shown in FIG. 2, each terminal assembly 2 further includes a riveting block 202. The riveting block 202 is spaced apart from an upper surface of the main body 1 and connected to an outer periphery of the terminal body 201. Each first insulating part 3 is arranged between the riveting block 202 and the upper surface of the main body 1.

In an embodiment, as shown in FIG. 2 and FIG. 7, the battery case further includes second insulating parts 5, where each second insulating part 5 is provided with a second through hole 501 allowing the terminal body 201 to pass therethrough, and the second insulating part 5 is arranged between a lower surface of the main body 1 and the terminal body 201. By providing the second insulating part 5, the insulation performance between the main body 1 and the terminal body 201 is ensured.

In an embodiment, as shown in FIG. 2 and FIG. 7, a hole wall of the first through hole 301 is provided closer to the terminal body 201 than a hole wall of the terminal hole 101, such that the first insulating part 3 extends beyond the main body 1 toward the terminal body 201, and the portion of the first insulating part 3 extending beyond the main body 1 presses against the sealing ring 4. The hole wall of the terminal hole 101 is provided closer to the terminal body 201 than the hole wall of the second through hole 501, such that the main body 1 extends beyond the second insulating part 5 toward the terminal body 201, and the portion of the main body 1 extending beyond the second insulating part 5 presses against the sealing ring 4. The extending portion of the first insulating part 3 and the extending portion of the main body 1 simultaneously press against the sealing ring 4, causing the sealing ring 4 to be compressed and deformed, thereby ensuring the sealing performance of the battery case.

In an embodiment, as shown in FIG. 2 to FIG. 7, each sealing ring 4 has a double-layer structure, where an upper layer of the sealing ring 4 is arranged corresponding to the first insulating part 3, and a lower layer of the sealing ring 4 is arranged corresponding to the main body 1. Specifically, the first insulating part 3 compresses the upper layer of the sealing ring 4, and the main body 1 compresses the lower layer of the sealing ring 4.

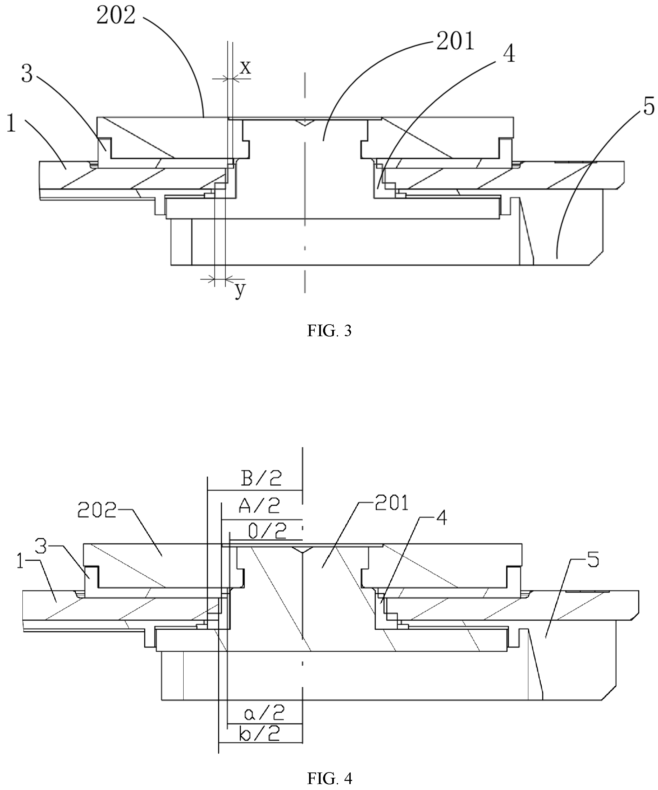

It is worth noting that as shown in FIG. 4, an outer diameter of the upper layer of the sealing ring 4 is A, an outer diameter of the lower layer of the sealing ring 4 is B, a diameter of the first through hole 301 is a, and a diameter of the terminal hole 101 is b. Accordingly, x=A/2-a/2, and y=B/2-b/2.

In an embodiment, a diameter of the terminal body 201 corresponding to the sealing ring 4 is O. A first overlap ratio X between the first insulating part 3 and the upper layer of the sealing ring 4 is expressed as X=x/(A/2-O/2), and the first overlap ratio X ranges from 37.5% to 75%; a second overlap ratio Y between the main body 1 and the lower layer of the sealing ring 4 is expressed as Y=y/(B/2-O/2), and the second overlap ratio Y ranges from 33.3% to 66.6%.

It should be noted that, a remaining amount of the first insulating part 3 relative to the upper layer of the sealing ring 4, and a remaining amount of the main body 1 relative to the lower layer of the sealing ring 4, i.e., (1-X) and (1-Y), serve as deformation space for the sealing ring 4. That is, referring to FIG. 2, when the first insulating part 3 compresses the upper layer of the sealing ring 4, the upper layer of the sealing ring 4 is squeezed and deformed into the space between the first insulating part 3 and the terminal body 201; when the main body 1 compresses the lower layer of the sealing ring 4, the lower layer of the sealing ring 4 is squeezed and deformed into the space between the main body 1 and the terminal body 201.

It is worth noting that the first overlap ratio X may take a value of 37.5%, 40%, 42%, 45%, 47%, 50%, 53%, 55%, 58%, 60%, 62%, 65%, 68%, 70%, 71%, 73%, 75%, etc.

It is worth noting that the second overlap ratio Y may take a value of 33.3%, 36%, 38%, 41%, 45%, 48%, 50%, 51%, 54%, 55%, 57%, 60%, 62%, 65%, 66.6%, etc.

It is worth noting that, as shown in FIG. 6, a height of the upper layer of the sealing ring 4 (i.e., a distance from an upper layer surface of the sealing ring 4 to a lower surface of the sealing ring 4) is C, a height of the lower layer of the sealing ring 4 (i.e., a distance from a lower layer surface of the sealing ring 4 to the lower surface of the sealing ring 4) is D, a distance from the lower surface of the first insulating part 3 to the lower surface of the sealing ring 4 is c, and a distance from the lower surface of the main body 1 to the lower surface of the sealing ring 4 is d. Accordingly, m=C-c, n=D-d, α=m/C, and β=n/D.

Certainly, in other alternative embodiments, the sealing ring 4 may also have a multi-layer structure, where one layer which functions as an upper layer in the multi-layer structure is disposed corresponding to the first insulating part 3, and another layer which functions as a lower layer in the multi-layer structure is disposed corresponding to the main body 1.

In an embodiment, the main body includes a housing and a cover plate. As shown in FIG. 1 to FIG. 7, the terminal holes 101 are provided in the cover plate. That is, the terminal assemblies 2, the first insulating parts 3, the sealing rings 4, and the second insulating parts 5 are all arranged corresponding to the cover plate, so as to form the battery top cover in combination.

Certainly, in other alternative embodiments, the terminal holes 101 can also be arranged corresponding to the housing.

Helium leak test and penetrant test are performed on different battery top covers below, and test results are listed in Table 1 and Table 2.

It can be seen from Table 1 that in Example 01 to Example 14, the first overlap amount x took a value in the range of 0.3 mm to 0.6 mm, the second overlap amount y took a value in the range of 0.5 mm to 1.0 mm, the first overlap ratio X took a value in the range of 37.5% to 75%, the second overlap ratio Y took a value in the range of 33.3% to 66.6%, the first compression amount m took a value in the range of 0.2 mm to 0.5 mm, the second compression amount n took a value in the range of 0.33 mm to 0.66 mm, the first compression ratio α took a value in the range of 8% to 20%, and the second compression ratio β took a value in the range of 30% to 60%. Therefore, the battery top covers of Example 01 to Example 14 could all pass the helium leak test and the penetrant test.

It can be seen from Table 2 that in Comparative Example 1, the first overlap amount x was 0.1 mm, which was outside the range of 0.3 mm to 0.6 mm and was less than 0.3 mm; the second overlap amount y was 0.2 mm, which was outside the range of 0.5 mm to 1.0 mm and was less than 0.5 mm; the first overlap ratio X was 12.5%, which was outside the range of 37.5% to 75% and was less than 37.5%; the second overlap ratio Y was 13.3%, which was outside the range of 33.3% to 66.6% and was less than 33.3%. Therefore, the values of x, y, X, and Y were too small, and the helium leak test and the penetrant test were not passed. In addition, after the battery top cover was disassembled, the deformation at the compressed portion of the sealing ring 4 was recoverable.

In Comparative Example 2, the first compression amount m was 0.1 mm, which was outside the range of 0.2 mm to 0.5 mm and was less than 0.2 mm; the second compression amount n was 0.25 mm, which was outside the range of 0.33 mm to 0.66 mm and was less than 0.33 mm; the first compression ratio α was 4%, which was outside the range of 8% to 20% and was less than 8%; the second compression ratio β was 20%, which was outside the range of 30% to 60% and was less than 30%. Therefore, the values of m, n, α, and β were too small, and the helium leak test and the penetrant test were not passed. In addition, after the battery top cover was disassembled, the deformation at the compressed portion of the sealing ring 4 was recoverable.

In Comparative Example 3, the first overlap amount x was 0.1 mm, which was outside the range of 0.3 mm to 0.6 mm and was less than 0.3 mm; the second overlap amount y was 0.2 mm, which was outside the range of 0.5 mm to 1.0 mm and was less than 0.5 mm; the first overlap ratio X was 12.5%, which was outside the range of 37.5% to 75% and was less than 37.5%; the second overlap ratio Y was 13.3%, which was outside the range of 33.3% to 66.6% and was less than 33.3%. Therefore, the values of x, y, X, and Y were too small, and the helium leak test and the penetrant test were not passed. In addition, after the battery top cover was disassembled, the deformation at the compressed portion of the sealing ring 4 was recoverable.

In Comparative Example 4, the first compression amount m was 0.1 mm, which was outside the range of 0.2 mm to 0.5 mm and was less than 0.2 mm; the second compression amount n was 0.25 mm, which was outside the range of 0.33 mm to 0.66 mm and was less than 0.33 mm; the first compression ratio α was 4%, which was outside the range of 8% to 20% and was less than 8%; the second compression ratio β was 20%, which was outside the range of 30% to 60% and was less than 30%. Therefore, the values of m, n, α, and β were too small, and the helium leak test and the penetrant test were not passed. In addition, after the battery top cover was disassembled, the deformation at the compressed portion of the sealing ring 4 was recoverable.

In Comparative Example 5, the first overlap amount x was 0.2 mm, which was outside the range of 0.3 mm to 0.6 mm and was less than 0.3 mm; the second overlap amount y was 0.4 mm, which was outside the range of 0.5 mm to 1.0 mm and was less than 0.5 mm; the first overlap ratio X was 25%, which was outside the range of 37.5% to 75% and was less than 37.5%; the second overlap ratio Y was 26.7%, which was outside the range of 33.3% to 66.6% and was less than 33.3%; the first compression amount m was 0.15 mm, which was outside the range of 0.2 mm to 0.5 mm and was less than 0.2 mm; the second compression amount n was 0.2 mm, which was outside the range of 0.33 mm to 0.66 mm and was less than 0.33 mm; the first compression ratio α was 6%, which was outside the range of 8% to 20% and was less than 8%; the second compression ratio β was 16%, which was outside the range of 30% to 60% and was less than 30%. Therefore, the values of x, y, X, Y, m, n, α, and β were too small, and the helium leak test and the penetrant test were not passed. In addition, after the battery top cover was disassembled, the deformation at the compressed portion of the sealing ring 4 was recoverable.

In Comparative Example 6, the first overlap amount x was 0.8 mm, which was outside the range of 0.3 mm to 0.6 mm and was greater than 0.6 mm; the second overlap amount y was 1.2 mm, which was outside the range of 0.5 mm to 1.0 mm and was greater than 1.0 mm; the first overlap ratio X was 81.3%, which was outside the range of 37.5% to 75% and was greater than 75%; the second overlap ratio Y was 80%, which was outside the range of 33.3% to 66.6% and was greater than 66.6%. Therefore, the values of x, y, X, and Y were too large. Although both the helium leak test and the penetrant test were passed, after the battery top cover was disassembled, the deformation at the compressed portion of the sealing ring 4 was unrecoverable, indicating reduced plastic strength. In addition, the sealing ring 4 had a relatively large weight, which increased the weight of the battery top cover.

In Comparative Example 7, the first compression amount m was 0.8 mm, which was outside the range of 0.2 mm to 0.5 mm and was greater than 0.5 mm; the second compression amount n was 1.2 mm, which was outside the range of 0.33 mm to 0.66 mm and was greater than 0.66 mm; the first compression ratio α was 40%, which was outside the range of 8% to 20% and was greater than 20%; the second compression ratio β was 75%, which was outside the range of 30% to 60% and was greater than 60%. Therefore, the values of m, n, α, and β were too large. Although the helium leak test and the penetrant test were passed, after the battery top cover was disassembled, the deformation at the compressed portion of the sealing ring 4 was unrecoverable, indicating reduced plastic strength. In addition, the sealing ring 4 had a relatively large weight, which increased the weight of the battery top cover.

In Comparative Example 8, the first overlap amount x was 0.7 mm, which was outside the range of 0.3 mm to 0.6 mm and was greater than 0.6 mm; the second overlap amount y was 1.1 mm, which was outside the range of 0.5 mm to 1.0 mm and was greater than 1.0 mm; the first overlap ratio X was 87.7%, which was outside the range of 37.5% to 75% and was greater than 75%; the second overlap ratio Y was 73.3%, which was outside the range of 33.3% to 66.6% and was greater than 66.6%; the first compression amount m was 0.8 mm, which was outside the range of 0.2 mm to 0.5 mm and was greater than 0.5 mm; the second compression amount n was 1.2 mm, which was outside the range of 0.33 mm to 0.66 mm and was greater than 0.66 mm; the first compression ratio α was 40%, which was outside the range of 8% to 20% and was greater than 20%; the second compression ratio β was 75%, which was outside the range of 30% to 60% and was greater than 60%. Therefore, the values of x, y, X, Y, m, n, α, and β were too large. Although the helium leak test and the penetrant test were passed, after the battery top cover was disassembled, the deformation at the compressed portion of the sealing ring 4 was unrecoverable, indicating reduced plastic strength. In addition, the sealing ring 4 had a relatively large weight, which increased the weight of the battery top cover. It should be noted that the helium leak test refers to detection of the airtightness of the battery top cover using a helium mass spectrometer. The test requirement is that at the terminal assembly 2 of the battery top cover, a gas pressure of 1.2 MPa is applied both from inside to outside and from outside to inside for 30 seconds, and the sealing requirement is satisfied if the measured helium leak rate is less than 1×10⁻⁷ Pa·m³/s.

It should be noted that the operational steps of the penetrant test include cleaning, penetration, and development. Specifically, stains on the surface of the battery top cover are cleaned with a cleaning agent. The battery top cover is left to stand for 5 min to 10 min until the surface thereof is dry. Then, a penetrant is applied, with a nozzle positioned at a distance of 20 mm to 30 mm from the surface of the battery top cover. The penetration time is generally 5 min to 15 min. The surface of the battery top cover is kept thoroughly wetted by the penetrant. A developer is well shaken and then uniformly sprayed onto the battery top cover from a distance of 300 mm. After the developer is sprayed, the battery top cover is disassembled, and observation can be carried out. The penetrant test is considered passed if no penetrant residue is found at the sealing ring 4.

It should be noted that in the above examples and comparative examples, the theoretical design value of A is 11.1 mm, the theoretical design value of B is 13.0 mm, the theoretical design value of a is 10.3 mm, the theoretical design value of b is 11.5 mm, the theoretical design value of C is 2.45 mm, the theoretical design value of D is 1.1 mm, the theoretical design value of c is 2.15 mm, and the theoretical design value of d is 0.65 mm.

It is worth noting that the battery case may be a prismatic battery case, a blade battery case, or the like.

**Table 1 Test Results of Examples (unit: mm)**

| | Example 01 | Example 02 | Example 03 | Example 04 | Example 05 | Example 06 | Example 07 | Example 08 | Example 09 | Example 10 | Example 11 | Example 12 | Example 13 | Example 14 |
|---|---|---|---|---|---|---|---|---|---|---|---|---|---|---|
| First overlap amount x | 0.3 | 0.35 | 0.4 | 0.45 | 0.55 | 0.4 | 0.45 | 0.55 | 0.5 | 0.42 | 0.38 | 0.5 | 0.6 | 0.6 |
| Second overlap amount y | 0.5 | 0.55 | 0.65 | 0.75 | 0.85 | 0.95 | 0.5 | 0.75 | 0.6 | 0.70 | 0.75 | 0.8 | 0.9 | 1.0 |
| First overlap ratio X | 37.5% | 43.75% | 50.00% | 56.25% | 48.75% | 50.00% | 56.25% | 48.75% | 62.5% | 52.5% | 47.5% | 62.5% | 75% | 75% |
| Second overlap ratio Y | 33.33% | 36.67% | 43.33% | 50.00% | 56.67% | 63.33% | 33.33% | 50.00% | 40% | 46.7% | 50% | 53.3% | 60% | 66% |
| First compression amount m | 0.25 | 0.35 | 0.45 | 0.5 | 0.3 | 0.20 | 0.35 | 0.45 | 0.35 | 0.29 | 0.32 | 0.40 | 0.45 | 0.50 |
| Second compression amount n | 0.35 | 0.45 | 0.55 | 0.33 | 0.40 | 0.55 | 0.45 | 0.66 | 0.40 | 0.46 | 0.41 | 0.50 | 0.55 | 0.60 |
| First compression ratio α | 10.20% | 14.29% | 18.37% | 20.00% | 12.24% | 8.20% | 14.29% | 18.37% | 14.29% | 11.80% | 13.10% | 16.33% | 18.37% | 20.00% |
| Second compression ratio β | 31.82% | 40.91% | 50% | 30% | 36.36% | 50% | 40.91% | 60% | 36.36% | 40.41% | 37.96% | 45.45% | 50.00% | 54.54% |
| Test result | Both the helium leak test and the penetrant test were passed. | | | | | | | | | | | | | |
| Note | All values of x, y, X, Y, m, n, α, and β fall within the required ranges. | | | | | | | | | | | | | |

**Table 2 Test results of Comparative Examples (unit: mm)**

| | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|
| First overlap amount x | 0.1 | 0.4 | 0.1 | 0.5 | 0.2 | 0.8 | 0.4 | 0.7 |
| Second overlap amount y | 0.2 | 0.75 | 0.2 | 0.7 | 0.4 | 1.2 | 0.75 | 1.1 |
| First overlap ratio X | 12.5% | 50% | 12.5% | 62.5% | 25% | 81.3% | 50% | 87.7% |
| Second overlap ratio Y | 13.3% | 50% | 13.3% | 46.7% | 26.7% | 80% | 50% | 73.3% |
| First compression amount m | 0.3 | 0.1 | 0.3 | 0.1 | 0.15 | 0.3 | 0.8 | 0.8 |
| Second compression amount n | 0.45 | 0.25 | 0.5 | 0.25 | 0.2 | 0.45 | 1.2 | 1.2 |
| First compression ratio α | 12% | 4% | 12% | 4% | 6% | 12% | 40% | 40% |
| Second compression ratio β | 40% | 20% | 45% | 20% | 16% | 40% | 75% | 75% |
| Test Result | The helium leak test and penetrant test were not passed; after the battery top cover was disassembled, the deformation at the compressed portion of the sealing ring was recoverable | | | | | The helium leak test and penetrant test were both passed; after the battery top cover was disassembled, the deformation at the compressed portion of the sealing ring was unrecoverable, indicating reduced plastic strength; the sealing ring had a relatively large weight. | | |
| Note | The values of x, y, X, and Y were too small. | The values of m, n, α, and β were too small. | The values of x, y, X, and Y were too small. | The values of m, n, α, and β were 100 small. | The values of x, y, X, Y, m, n, α, and β were too small. | The values of x, y, X, and Y were too large. | The values of m, n, α, and β were too large. | The values of x, y, X, Y, m, n, α, and β were too large. |

According to embodiments of the present application, in another aspect, a battery is further provided, including the battery case described above. The battery further includes a cell, where the cell is located within the battery case, and the cell is electrically connected to the terminal assemblies 2.

It is worth noting that the battery may be a power battery or an energy storage battery.

It is worth noting that the battery may be a prismatic battery, a blade battery, or the like.

According to embodiments of the present application, in yet another aspect, a battery module is further provided, including the battery described above.

According to embodiments of the present application, in still another aspect, a battery pack is further provided, including the battery module described above.

Although embodiments of the present application are described with reference to the drawings, those skilled in the art could make various modifications and variations without departing from the spirit and scope of the present application, and such modifications and variations fall within the scope defined by the appended claims.

## Claims

1. A battery case, **characterized by** comprising:
a main body, provided with a terminal hole;
a terminal assembly, provided to pass through the terminal hole, the terminal assembly comprising a terminal body;
a first insulating part, provided between the main body and the terminal assembly; and
a sealing ring, provided corresponding to the terminal hole, wherein the sealing ring is compressed between the main body and the terminal assembly and between the first insulating part and the terminal assembly; a first overlap amount x between the first insulating part and the sealing ring ranges from 0.3 mm to 0.6 mm, and a second overlap amount y between the main body and the sealing ring ranges from 0.5 mm to 1.0 mm; a first compression amount m of the sealing ring by the first insulating part ranges from 0.2 mm to 0.5 mm, and a second compression amount n of the sealing ring by the main body ranges from 0.33 mm to 0.66 mm; a first compression ratio α of the sealing ring by the first insulating part ranges from 8% to 20%, and a second compression ratio β of the sealing ring by the main body ranges from 30% to 60%; an outer diameter of an upper layer of the sealing ring is A, an outer diameter of a lower layer of the sealing ring is B, and a diameter of the terminal body corresponding to the sealing ring is O; a first overlap ratio X between the first insulating part and the upper layer of the sealing ring is expressed as X=x/(A/2-O/2), and the first overlap ratio X ranges from 37.5% to 75%; a second overlap ratio Y between the main body and the lower layer of the sealing ring is expressed as Y=y/(B/2-O/2), and the second overlap ratio Y ranges from 33.3% to 66.6%.

2. The battery case as claimed in claim 1, **characterized in that** the sealing ring overlaps the first insulating part and the main body, and the second overlap amount y is greater than or equal to the first overlap amount x.

3. The battery case as claimed in claim 1 or 2, **characterized in that** the main body comprises a housing and/or a cover plate, and the terminal hole is provided in the housing and/or the cover plate.

4. The battery case as claimed in claim 1 or 2, **characterized in that** the terminal body is provided to pass through the terminal hole, and the first insulating part is provided with a first through hole allowing the terminal body to pass therethrough.

5. The battery case as claimed in claim 4, **characterized in that** the battery case further comprises a second insulating part, wherein the second insulating part is provided with a second through hole allowing the terminal body to pass therethrough, and the second insulating part is provided between a lower surface of the main body and the terminal body; and/or,
the sealing ring has a multi-layer structure, wherein one layer which functions as an upper layer of the sealing ring is disposed corresponding to the first insulating part, and another layer which functions as a lower layer of the sealing ring is disposed corresponding to the main body.

6. The battery case as claimed in claim 5, **characterized in that** a hole wall of the first through hole is provided closer to the terminal body than a hole wall of the terminal hole, such that the first insulating part extends beyond the main body toward the terminal body, and a portion of the first insulating part extending beyond the main body presses against the sealing ring; and/or, a hole wall of the terminal hole is provided closer to the terminal body than a hole wall of the second through hole, such that the main body extends beyond the second insulating part toward the terminal body, and a portion of the main body extending beyond the second insulating part presses against the sealing ring.

7. The battery case as claimed in claim 5, **characterized in that** a diameter of the first through hole is a, and a diameter of the terminal hole is b, satisfying x=A/2-a/2, and y=B/2-b/2.

8. The battery case as claimed in claim 7, **characterized in that** a height of the upper layer of the sealing ring is C, a height of the lower layer of the sealing ring is D, a distance from a lower surface of the first insulating part to a lower surface of the sealing ring is c, and a distance from the lower surface of the main body to the lower surface of the sealing ring is d, satisfying m=C-c, n=D-d, α=m/C, and β=n/D.

9. A battery, **characterized by** comprising the battery case as claimed in any one of claims 1 to 8.
